# FASCICULE DE BREVET EUROPEEN

(11) **EP 1 574 768 B1**
(45) Date de publication et mention de la délivrance du brevet: **15.11.2006**
(21) Numéro de dépôt: 05290524.7
(22) Date de dépôt: 08.03.2005
(51) Int. Cl.: F16K 15/20

(54) **Objet gonflable muni de moyens formant valve de gonflage/dégonflage**
Aufblasbarer Gegenstand mit Mitteln die ein Ventil zum Aufpumpen/Luft ablassen bilden
Inflatable object with means forming a valve for inflating/deflating

(30) Priorité: 11.03.2004 FR 0402553
(43) Date de publication de la demande: 14.09.2005
(73) Titulaire: Plastimo France, 56100 Lorient (FR)
(72) Inventeur: Condroyer, Alain, 56100 Lorient (FR); Gaydon, Jean-François, 56100 Lorient (FR)
(74) Mandataire: Habasque, Etienne J. Jean-François

(56) Documents cités:
- FR-A- 564 833
- FR-A- 1 102 110
- GB-A- 1 249 175
- US-A- 2 142 044
- US-A- 4 462 449

## Description

La présente invention concerne un objet gonflable.

Plus particulièrement, l'invention concerne un objet gonflable comportant une enveloppe en matière plastique munie de moyens formant valve de gonflage/dégonflage comportant un corps de valve adapté pour recevoir un bouchon d'ouverture/fermeture de celui-ci. (Voir par exemple les documents US-A-2142 044 et US-A-4 462 449).

Il existe déjà dans l'état de la technique des objets gonflables de ce type, qui sont destinés par exemple à constituer des pare-battages ou autres notamment dans le domaine de l'industrie nautique.

Cependant, la réalisation de ces objets par rotomoulage ou extrusion/soufflage pose un certain nombre de problèmes notamment de mise en relation fluidique du corps de valve et de l'enveloppe.

En effet, il est nécessaire de prévoir dans le moule une pièce rapportée destinée à former un évent de mise en relation fluidique du corps de valve et de l'enveloppe.

L'évent peut également être formé par perçage de l'enveloppe.

On conçoit cependant que ceci nécessite une reprise des objets ainsi formés.

Le but de l'invention est donc de résoudre ces problèmes.

A cet effet, l'invention concerne un objet gonflable comportant une enveloppe en matière plastique, munie de moyens formant valve de gonflage/dégonflage comportant un corps de valve adapté pour recevoir un bouchon d'ouverture/fermeture de celui-ci, caractérisé en ce que l'enveloppe et le corps de valve sont formés d'une seule pièce, et en ce que le bouchon comporte des moyens de perforation de l'enveloppe au fond du corps de valve lors de sa première introduction dans ce corps.

Suivant d'autres caractéristiques conformes à invention :
- le bouchon présente d'une extrémité à l'autre :
   - un corps de bouchon dont la surface extérieure est munie de moyens de vissage adaptés pour coopérer avec des moyens de vissage complémentaires du corps de valve,
   - une portion formant surface de contact adaptée pour coopérer avec une portion formant surface de contact complémentaire du corps de valve afin d'assurer l'ouverture/fermeture de celui-ci, et
   - une portion en forme de poinçon biseauté formant les moyens de perforation de l'enveloppe ;
- le corps de bouchon est tubulaire et présente une première extrémité ouverte, adaptée pour être reliée à l'environnement ou à une source de fluide de gonflage de l'objet, et une seconde extrémité, située à proximité de la portion formant surface du contact, et munie d'au moins un évent transversal ;
- les surfaces de contact complémentaires du bouchon et du corps de valve sont tronconiques ;
- la portion formant poinçon biseauté du bouchon est tubulaire et comporte à une première extrémité située à proximité de la portion formant surface de contact, au moins un évent transversal et une seconde extrémité libre adaptée pour être en communication fluidique avec enveloppe ;
- la seconde extrémité libre de la portion formant poinçon du bouchon est ouverte axialement et présente au moins un évent transversal ;
- la première extrémité du bouchon est munie d'un capuchon ;
- la première extrémité du bouchon présente une surface de contact tronconique adaptée pour coopérer avec une surface complémentaire de la source de fluide de l'objet ; et
- la première extrémité du bouchon comporte des moyens de manoeuvre de celui-ci ;
- il est obtenu par rotomoulage ; et
- il est obtenu par extrusion/soufflage.

L'invention sera mieux comprise avec à la lecture de la description qui va suivre donnée uniquement à titre d'exemple et faite en se référant aux dessins annexés, sur lesquels :
- la Fig.1 représente une vue de côté en coupe d'un premier exemple de réalisation d'un objet gonflable selon l'invention,
- la Fig.2 représente une vue en coupe prise selon la ligne II-II de la figure 1,
- la Fig.3 représente une vue en perspective d'un bouchon entrant dans la constitution d'un objet selon l'invention,
- la Fig.4 représente une vue en coupe de cet objet gonflable, dans laquelle le bouchon est en position de fermeture de l'enveloppe,
- la Fig.5 représente une vue en coupe prise selon la ligne V-V de la figure 4,
- la Fig.6 représente une autre vue en perspective d'un bouchon entrant dans la constitution d'un objet selon l'invention,
- la Fig.7 illustre une vue en coupe de cet objet gonflable, dans laquelle le bouchon est en position d'ouverture de l'enveloppe, et
- la Fig.8 représente une vue en coupe prise suivant la ligne VIII-VIII de la figure 7.

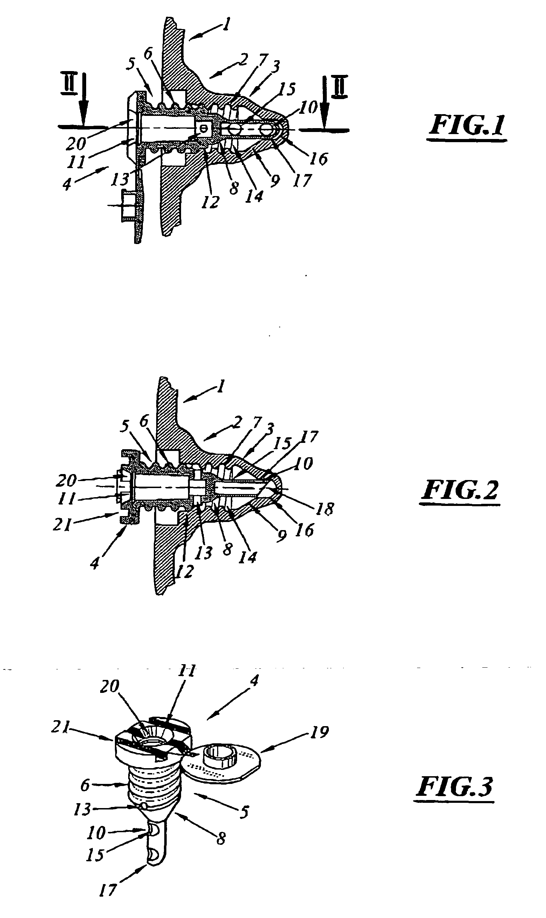

On a en effet illustré sur les figures 1 à 8, un exemple de réalisation d'un objet gonflable selon l'invention.

Cet objet gonflable comporte une enveloppe en matière plastique désignée par la référence générale 1 sur ces figures, munie de moyens formant valve désignés par la référence générale 2, de gonflage/dégonflage de l'objet et comportant un corps de valve désigné par la référence générale 3, adapté pour recevoir un bouchon d'ouverture/fermeture de celui-ci.

Ce bouchon est désigné par la référence générale 4 sur ces figures 1 à 8.

Dans l'exemple de réalisation représenté sur ces figures 1 à 8, l'enveloppe 1 et le corps de valve 3 sont formés d'une seule pièce par exemple par rotomoulage dans un moule de rotomoulage de type classique et le bouchon 4 comporte des moyens de perforation de l'enveloppe au fond du corps de valve lors de sa première introduction dans ce corps.

Bien entendu, d'autres procédés de fabrication peuvent être envisagés comme par exemple par extrusion/soufflage.

En fait, et selon l'exemple de réalisation représenté sur ces figures, le bouchon 4 présente d'une extrémité à l'autre, un corps de bouchon désigné par la référence générale 5, dont la surface extérieure est munie de moyens de vissage désignés par la référence générale 6, adaptés pour coopérer avec des moyens de vissage complémentaires 7 du corps de valve 3, permettant de le déplacer entre des positions d'ouverture et de fermeture de l'enveloppe, une portion formant surface de contact désignée par la référence générale 8, adaptée pour coopérer avec une portion formant surface de contact complémentaire 9 du corps de valve 3, afin d'assurer l'ouverture/fermeture de celui-ci et une portion en forme de poinçon biseauté désignée par la référence générale 10 sur ces figures, formant les moyens de perforation de l'enveloppe lors de la première introduction du bouchon dans le corps de valve.

On conçoit en effet que lorsque l'enveloppe et le corps de valve sont réalisés d'une seule pièce, le fond du corps de valve est obturé par une portion de l'enveloppe.

Il y a alors lieu, lors de la première introduction du bouchon dans le corps de valve, de perforer l'enveloppe au fond du corps de valve afin de les mettre en relation fluidique.

En fait, le corps de bouchon 5 peut par exemple être tubulaire et présenter une première extrémité ouverte, désignée par la référence générale 11, adaptée pour être reliée à l'environnement ou à une source de fluide de gonflage de l'objet, et une seconde extrémité désignée par la référence générale 12 située à proximité de la portion formant surface de contact 8 et munie d'au moins un évent transversal désigné par la référence générale 13.

Les surfaces de contact complémentaires du bouchon et du corps de valve, c'est-à-dire les surfaces 8 et 9, peuvent par exemple être tronconiques pour assurer une bonne étanchéité entre celles-ci.

De plus, la portion formant poinçon biseauté du bouchon, désignée par la référence générale 10, peut également être tubulaire et comporter à une première extrémité désignée par la référence générale 14, située à proximité de la portion formant surface de contact 8 de celui-ci, au moins un évent transversal désigné par la référence générale 15, et une seconde extrémité libre, en communication fluidique avec l'enveloppe.

Cette seconde extrémité libre de la portion formant poinçon du bouchon, désignée par la référence générale 16 sur ces figures, peut présenter une ouverture axiale et au moins un évent transversal désigné par la référence générale 17 sur ces figures.

L'ouverture axiale de cette extrémité du bouchon est quant à elle désignée par la référence générale 18.

De plus, la première extrémité 11 du bouchon 4 peut également être munie d'un capuchon comme cela est illustré sur la figure 3, ce capuchon étant désigné par la référence générale 19, pour obturer son ouverture.

Ainsi que cela est illustré, la première extrémité 11 du bouchon 4 peut également présenter une surface de contact tronconique désignée par la référence générale 20 sur ces figures, adaptée pour coopérer avec une surface complémentaire des moyens de gonflage de l'objet, de même que des moyens de manoeuvre de celui-ci, désignés par exemple par la référence générale 21, ces moyens de manoeuvre étant par exemple formés par des empreintes adaptées pour coopérer avec un outil quelconque de manoeuvre de ce bouchon.

Bien entendu, d'autres modes de réalisation de ces moyens peuvent être envisagés.

On conçoit alors que lors de la fabrication par rotomoulage ou extrusion/soufflage de l'enveloppe et du corps de valve d'une seule pièce, de la matière plastique vient se déposer contre la paroi du moule pour former ces deux éléments d'une façon continue.

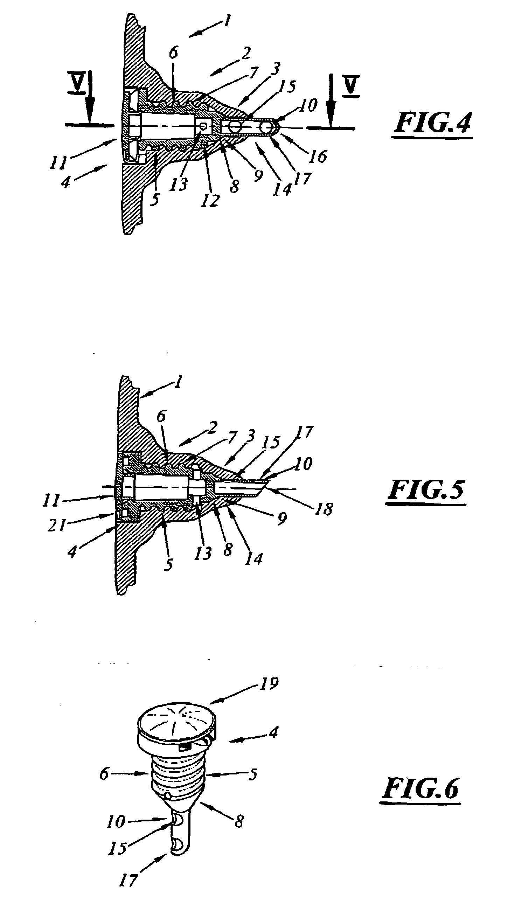

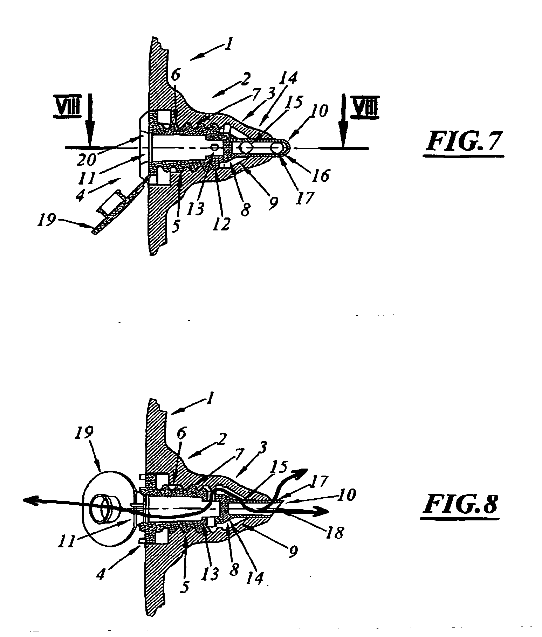

Le fond du corps de valve est alors obturé par une portion de l'enveloppe. Le bouchon est introduit dans ce corps de valve et lors de sa première mise en position, l'extrémité biseautée de la portion de celui-ci formant poinçon vient percer cette portion d'enveloppe comme cela est illustré sur les figures 4, 5, 7, et 8, ce qui permet d'assurer ensuite un gonflage ou un dégonflage de l'objet comme cela est illustré sur la figure 8, où l'on peut constater que la mise en relation fluidique de l'enveloppe avec son environnement se fait à travers la portion tubulaire de corps du bouchon, le ou les évents transversaux de celui-ci, les surfaces de contact complémentaires et la portion formant poinçon biseauté et tubulaire de ce bouchon.

Bien entendu d'autres modes de réalisation encore peuvent être envisagés.

## Revendications

1. Objet gonflable comportant une enveloppe en matière plastique (1), munie de moyens formant valve de gonflage/dégonflage (2) comportant un corps de valve (3) adapté pour recevoir un bouchon d'ouverture/fermeture (4) de celui-ci, **caractérisé :**
- **en ce que** l'enveloppe (1) et le corps de valve (3) sont formés d'une seule pièce, et
- **en ce que** le bouchon (4) comporte des moyens (10) de perforation de l'enveloppe (1) au fond du corps de valve (3) lors de sa première introduction dans ce corps.

2. Objet gonflable selon la revendication 1, **caractérisé en ce que** le bouchon présente d'une extrémité à l'autre :
- un corps de bouchon (5) dont la surface extérieure est munie de moyens (6) de vissage adaptés pour coopérer avec des moyens de vissage complémentaires (7) du corps de valve (3),
- une portion (8) formant surface de contact adaptée pour coopérer avec une portion (9) formant surface de contact complémentaire du corps de valve (3) afin d'assurer l'ouverture/fermeture de celui-ci, et
- une portion (10) en forme de poinçon biseauté formant les moyens de perforation de l'enveloppe (1 ; 101).

3. Objet gonflable selon la revendication 2, **caractérisé en ce que** le corps de bouchon (5) est tubulaire et présente une première extrémité ouverte (11), adaptée pour être reliée à l'environnement ou à une source de fluide de gonflage de l'objet, et une seconde extrémité (12), située à proximité de la portion formant surface du contact (8), et munie d'au moins un évent transversal (13).

4. Objet gonflable selon les revendications 2 ou 3, **caractérisé en ce que** les surfaces de contact complémentaires (8, 9) du bouchon (4) et du corps de valve (3) sont tronconiques.

5. Objet gonflable selon l'une quelconque des revendications 2 à 4, **caractérisé en ce que** la portion formant poinçon biseauté du bouchon (4) est tubulaire et comporte à une première extrémité (14) située à proximité de la portion (8) formant surface de contact, au moins un évent transversal (15) et une seconde extrémité libre (16) adaptée pour être en communication fluidique avec l'enveloppe (1 ; 101).

6. Objet gonflable selon la revendication 5 , **caractérisé en ce que** la seconde extrémité libre de la portion formant poinçon du bouchon (4) est ouverte axialement (18) et présente au moins un évent transversal (17).

7. Objet gonflable selon l'une quelconque des revendications 3 à 6, **caractérisé en ce que** la première extrémité du bouchon (11) est munie d'un capuchon (19).

8. Objet gonflable selon l'une quelconque des revendications 3 à 7, **caractérisé en ce que** la première extrémité du bouchon (4) présente une surface de contact tronconique (20) adaptée pour coopérer avec une surface complémentaire de la source de fluide de l'objet.

9. Objet gonflable selon l'une quelconque des revendications 3 à 8, **caractérisé en ce que** la première extrémité (11) du bouchon (4) comporte des moyens de manoeuvre (21) de celui-ci.

10. Objet gonflable selon l'une quelconque des revendications précédentes, **caractérisé en ce qu'**il est obtenu par rotomoulage.

11. Objet gonflable selon l'une quelconque des revendications 1 à 9, **caractérisé en ce qu'**il est obtenu par extrusion/soufflage.

## Claims

1. Inflatable object comprising an envelope made of plastics (1), provided with means forming an inflating/deflating valve (2) comprising a valve body (3) adapted to receive a closing/opening stopper (4) therefor, **characterised in that**:
- the envelope (1) and the valve body (3) are made in one piece, and
- the stopper (4) comprises means (10) for perforating the envelope (1) at the bottom of the valve body (3) when it is first inserted in this body.

2. Inflatable object according to claim 1, **characterised in that** the stopper comprises, from one end to the other:
- a stopper body (5) the outer surface of which is provided with screwing means (6) adapted to cooperate with mating screwing means (7) on the valve body (3),
- a portion (8) forming a contact surface adapted to cooperate with a portion (9) forming a mating contact surface on the valve body (3) so as to effect the opening/closing of the latter, and
- a portion (10) in the form of a bevelled punch forming the means for perforating the envelope (1; 101):

3. Inflatable object according to claim 2, **characterised in that** the stopper body (5) is tubular and has a first open end (11) adapted to be connected to atmosphere or to a source of inflating fluid for the object, and a second end (12), located close to the portion forming the contact surface (8), and provided with at least one transverse vent (13).

4. Inflatable object according to claims 2 or 3, **characterised in that** the mating contact surfaces (8, 9) of the stopper (4) and valve body (3) are frustum-shaped.

5. Inflatable object according to any one of claims 2 to 4, **characterised in that** the portion forming a bevelled punch of the stopper (4) is tubular and comprises, at a first end (14) located close to the portion (8) forming the contact surface, at least one transverse vent (15) and a second free end (16) adapted to be in fluidic communication with the envelope (1; 101).

6. Inflatable object according to claim 5, **characterised in that** the second free end of the portion forming the punch of the stopper (4) is axially open (18) and has at least one transverse vent (17).

7. Inflatable object according to any one of claims 3 to 6, **characterised in that** the first end of the stopper (11) is provided with a cap (19).

8. Inflatable object according to any one of claims 3 to 7, **characterised in that** the first end of the stopper (4) has a frustum-shaped contact surface (20) adapted to cooperate with a mating surface of the fluid source for the object.

9. Inflatable object according to any one of claims 3 to 8, **characterised in that** the first end (11) of the stopper (4) comprises means (21) for manoeuvring the latter.

10. Inflatable object according to any one of the preceding claims, **characterised in that** it is obtained by rotary moulding.

11. Inflatable object according to any one of claims 1 to 9, **characterised in that** it is obtained by extrusion/blow moulding.

## Patentansprüche

1. Aufblasbarer Gegenstand, der eine Hülle (1) aus Kunststoff aufweist, die mit Mitteln versehen ist, die ein Aufblas-/Ablassventil (2) bilden, das einen Ventilkörper (3) aufweist, der so beschaffen ist, dass er einen Öffnungs-/Verschließstopfen (4) hierfür aufnimmt, **dadurch gekennzeichnet,**
- **dass** die Hülle (1) und der Ventilkörper (3) einteilig ausgebildet sind und
- **dass** der Stopfen (4) Mittel (10) aufweist, um die Hülle (1) im Boden des Ventilkörpers (3) zu durchstechen, wenn er erstmalig in diesen Körper eingeführt wird.

2. Aufblasbarer Gegenstand nach Anspruch 1, **dadurch gekennzeichnet, dass** der Stopfen von einem Ende zum anderen aufweist:
- einen Stopfenkörper (5), dessen äußere Oberfläche mit Gewindemitteln (6) versehen ist, die so beschaffen sind, dass sie mit komplementären Gewindemitteln (7) des Ventilkörpers (3) zusammenwirken,
- einen Abschnitt (8), der eine Kontaktoberfläche bildet, die so beschaffen ist, dass sie mit einem Abschnitt (9) zusammenwirkt, der eine komplementäre Kontaktoberfläche des Ventilkörpers (3) bildet, um das Öffnen/Schließen des Ventilkörpers (3) zu gewährleisten, und
- einen Abschnitt (10) in Form eines abgefasten Dorns, der die Mittel (1; 101) für das Durchstechen der Hülle bildet.

3. Aufblasbarer Gegenstand nach Anspruch 2, **dadurch gekennzeichnet, dass** der Stopfenkörper (5) rohrförmig ist und ein erstes offenes Ende (11), das so beschaffen ist, dass es mit der Umgebung oder mit einer Fluidquelle zum Aufblasen des Gegenstandes verbunden werden kann, und ein zweites Ende (12), das sich in der Nähe des die Kontaktoberfläche (8) bildenden Abschnitts befindet und mit wenigstens einem transversalen Luftloch (13) versehen ist, aufweist.

4. Aufblasbarer Gegenstand nach den Ansprüchen 2 oder 3, **dadurch gekennzeichnet, dass** die komplementären Kontaktoberflächen (8, 9) des Stopfens (4) bzw. des Ventilkörpers (3) kegelstumpfförmig sind.

5. Aufblasbarer Gegenstand nach einem der Ansprüche 2 bis 4, **dadurch gekennzeichnet, dass** der einen abgefasten Dom bildende Abschnitt des Stopfens (4) rohrförmig ist und ein erstes Ende (14), das sich in der Nähe des die Kontaktoberfläche bildenden Abschnitts (8) befindet, wenigstens ein transversales Luftloch (15) sowie ein freies zweites Ende (16), das so beschaffen ist, dass es mit der Hülle (1; 101) in einer Fluidverbindung steht, aufweist.

6. Aufblasbarer Gegenstand nach Anspruch 5, **dadurch gekennzeichnet, dass** das freie zweite Ende des den Dorn bildenden Abschnitts des Stopfens (4) axial offen ist (18) und wenigstens ein transversales Luftloch (17) aufweist.

7. Aufblasbarer Gegenstand nach einem der Ansprüche 3 bis 6, **dadurch gekennzeichnet, dass** das erste Ende des Stopfens (11) mit einer Abdeckklappe (19) versehen ist.

8. Aufblasbarer Gegenstand nach einem der Ansprüche 3 bis 7, **dadurch gekennzeichnet, dass** das erste Ende des Stopfens (4) eine kegelstumpfförmige Kontaktoberfläche (20) aufweist, die so beschaffen ist, dass sie mit einer komplementären Oberfläche der Fluidquelle des Gegenstands zusammenwirkt.

9. Aufblasbarer Gegenstand nach einem der Ansprüche 3 bis 8, **dadurch gekennzeichnet, dass**, das erste Ende (11) des Stopfens (4) Mittel (21) für seine Betätigung aufweist.

10. Aufblasbarer Gegenstand nach einem der vorhergehenden Ansprüche, **dadurch gekennzeichnet, dass** er durch Rotationsformen erhalten wird.

11. Aufblasbarer Gegenstand nach einem der Ansprüche 1 bis 9, **dadurch gekennzeichnet, dass** er durch Strangpressen/Blasformen erhalten wird.
